(19) Europäisches Patentamt
European Patent Office
Office européen des brevets

(11) **EP 3 501 095 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **17748720.4**

(22) Anmeldetag: **01.08.2017**

(51) Int Cl.:
**H02P 21/06** *(2016.01)*    **H02P 21/22** *(2016.01)*

(86) Internationale Anmeldenummer:
**PCT/EP2017/069378**

(87) Internationale Veröffentlichungsnummer:
**WO 2018/033378 (22.02.2018 Gazette 2018/08)**

(54) **VERFAHREN ZUR REGELUNG EINER SYNCHRONMASCHINE UND REGELVORRICHTUNG FÜR EINE SYNCHRONMASCHINE**

METHOD FOR CONTROLLING A SYNCHRONOUS MACHINE AND CONTROL DEVICE FOR A SYNCHRONOUS MACHINE

PROCÉDÉ DE RÉGULATION D'UNE MACHINE SYNCHRONE ET DISPOSITIF DE RÉGULATION D'UNE MACHINE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2016 DE 102016211474**

(43) Veröffentlichungstag der Anmeldung:
**26.06.2019 Patentblatt 2019/26**

(73) Patentinhaber: **Robert Bosch GmbH**
**70442 Stuttgart (DE)**

(72) Erfinder:
• **BRAUN, Martin**
**72149 Neustetten-Wolfenhausen (DE)**
• **RAPP, Holger**
**71254 Ditzingen (DE)**
• **KURZ, Stefan**
**60322 Frankfurt (DE)**

(56) Entgegenhaltungen:
**DE-A1- 4 209 305    US-A1- 2011 241 586**

EP 3 501 095 B1

**Beschreibung**

Die vorliegende Erfindung betrifft ein Verfahren zur Regelung einer Synchronmaschine und eine Regelvorrichtung für eine Synchronmaschine.

Stand der Technik

Die Druckschrift WO 2010 043 454 A1 offenbart ein Verfahren und eine Vorrichtung zur feldorientierten Regelung einer Synchronmaschine. Dabei erfolgt eine Ermittlung eines Querstrom-Sollwertes, eines Längsstrom-Sollwertes, eines Querstrom-Istwertes und eines Längsstrom-Istwertes. Der Querstrom dient hierbei der Drehmomentbildung der Maschine, während der Längsstrom der Feldbildung bzw. Feldschwächung dient. Diese Werte werden einem Regler zugeführt, der eine Längsspannungskomponente und eine Querspannungskomponente ermittelt. Diese werden in Spannungen eines Mehrphasen- Drehspannungssystems umgewandelt und dann an einen Pulswechselrichter weitergeleitet. Umgekehrt werden die Statorströme der Maschine erfasst und unter Kenntnis des Rotorpositionswinkels bzw. des Polradwinkels in den Längs- und den Querstromistwert gewandelt. Eine Regelung der Synchronmaschine erfolgt durch die Ausgangssignale des Pulswechselrichters.

Die Druckschrift US 2011/0241586 A1 offenbart eine stromregelnde Vektorregelung für eine Synchronmaschine, deren Polradspannung nicht-sinusförmige Anteile enthält.

Umrichtergespeiste Synchronmaschinen werden in der Regel unabhängig von der Form ihrer durch das Erregerfeld induzierten Spannung mit sinusförmigen Strömen betrieben. Auch eine Spannungsvorsteuerung zu Einbringung dieser sinusförmigen Ströme erfolgt dabei sinusförmig. Abweichungen von der Sinusform in der durch das Erregerfeld induzierten Spannung können zu Störungen im Stromverlauf führen. Diese können beispielsweise durch einen Störgrößenbeobachter kompensiert werden. Auf diese Weise wird in jedem Fall ein nahezu sinusförmiger Stromverlauf in die Synchronmaschine eingeprägt.

Offenbarung der Erfindung

Die vorliegende Erfindung offenbart ein Verfahren zur Regelung einer Synchronmaschine mit den Merkmalen des Patentanspruchs 1 und eine Regelvorrichtung für eine Synchronmaschine mit den Merkmalen des Patentanspruchs 12

Demgemäß ist vorgesehen:

Ein Verfahren zur Regelung einer Synchronmaschine mit den Schritten des Erfassens eines Messwerts einer Regelgröße der Synchronmaschine in einem statororientierten Koordinatensystem, und des Transformierens des erfassten Messwerts von dem statororientierten Koordinatensystem in ein feldorientiertes Koordinatensystem. Das Verfahren umfasst ferner die Schritte des Berechnens einer Stellgröße für die Ansteuerung der Synchronmaschine in dem feldorientierten Koordinatensystem, des Transformierens der berechneten Stellgröße von dem feldorientierten Koordinatensystem in das Stator orientierte Koordinatensystem und des Ansteuerns der Synchronmaschine basierend auf der in das Stator orientierte Koordinatensystem transformierten Stellgröße. Die Transformation der berechneten Stellgröße von dem feldorientierten Koordinatensystem in das Stator orientierte Koordinatensystem umfasst dabei eine Transformation in einen bezüglich des elektrischen Polradwinkels der Synchronmaschine nicht-sinusförmigen Verlauf der Stellgröße in dem statororientierten Koordinatensystem. Insbesondere ist die Funktion der Stellgröße in Abhängigkeit von dem Polradwinkel der Synchronmaschine in dem statororientierten Koordinatensystem eine nicht-sinusförmige Funktion. In gleicher Weise ist der einzustellende Verlauf der Regelgröße in Abhängigkeit von dem Polradwinkel eine nicht-sinusförmige Funktion.

Weiter ist vorgesehen:

Eine Regelvorrichtung für eine Synchronmaschine mit einer Messeinrichtung, einer ersten Transformationseinrichtung, einer Recheneinrichtung, einer zweiten Transformationseinrichtung und einer Ansteuereinrichtung. Die Messeinrichtung ist dazu ausgelegt, eine Regelgröße der Synchronmaschine zu erfassen. Die erste Transformationseinrichtung ist dazu ausgelegt, die erfasste Regelgröße der Synchronmaschine von einem statororientierten Koordinatensystem in ein feldorientiertes Koordinatensystem zu transformieren. Die Recheneinrichtung ist dazu ausgelegt, unter Verwendung der in das feldorientierte Koordinatensystem transformierten Regelgröße und einem vorbestimmten Sollwert eine Stellgröße für die Synchronmaschine zu berechnen. Die zweite Transformationseinrichtung ist dazu ausgelegt, die berechnete Stellgröße von dem feldorientierten Koordinatensystem in das Stator orientierte Koordinatensystem zu transformieren. Dabei weist der Verlauf der transformierten Stellgröße bezüglich des Polradwinkels der Synchronmaschine in dem statororientierten Koordinatensystem einen nicht-sinusförmige Verlauf auf. Insbesondere ist die transformierte Stellgröße in dem statororientierten Koordinatensystem als Funktion vom Polradwinkel der Synchronmaschine eine nicht-sinusförmige Funktion. In gleicher Weise ist der einzustellende Verlauf der Regelgröße in Abhängigkeit von dem Polradwinkel eine nicht-sinusförmige Funktion. Die Ansteuereinrichtung ist dazu ausgelegt, die Synchronmaschine unter Verwendung der in das Stator orientierte Koordinatensystem transformierten, nicht-sinusförmigen Stellgröße anzusteuern.

Ferner ist vorgesehen:

Ein elektrisches Antriebssystem mit einer Synchronmaschine und einer erfindungsgemäßen Regelvorrichtung.

Vorteile der Erfindung

Der vorliegenden Erfindung liegt die Erkenntnis zugrunde, dass bei einem Zusammenwirken von einer nicht-sinusförmigen induzierten Spannung in einer Synchronmaschine und einer Einspeisung von sinusförmigen Strömen in die Synchronmaschine es zu Variationen im Drehmoment der Synchronmaschine kommt. Insbesondere kann das Drehmoment abhängig vom Polradwinkel der Synchronmaschine variieren. Dies kann bei niedrigen Motordrehzahlen zu einem Ruckeln der Synchronmaschine führen. Bei höheren Drehzahlen kann sich hierdurch eine unerwünschte Geräuschentwicklung einstellten. Das Einspeisen von nicht-sinusförmigen Strömen in eine Synchronmaschine stellt jedoch eine nicht zu vernachlässigende Herausforderung dar. Insbesondere wenn die Berechnung von Regelgrößen der Synchronmaschine in einem feldorientierten Koordinatensystem durchgeführt wird, so basieren die Transformationen zwischen statororientiertem Koordinatensystem und feldorientiertem Koordinatensystem in konventionellen Systemen auf sinusförmigen Signalverläufen. Diese darauf basierenden Transformationsgleichungen werden auch als "Park-Transformation" bezeichnet.

Die Grundidee der feldorientierten Regelung besteht darin, dass im eingeschwungenen Zustand sinusförmig verlaufende Regelgrößen durch deren Transformation in das feldorientierte Koordinatensystem zu Gleichgrößen werden. Weiterhin besteht die Grundidee darin, dass die Stellgrößen im feldorientierten Koordinatensystem, die im eingeschwungenen Zustand Gleichgrößen sind, durch deren Transformation in das Stator orientierte Koordinatensystem zu sinusförmigen Wechselgrößen mit der gewünschten Amplitude, Frequenz und Phasenlage werden. Dadurch muss der Führungsfrequenzgang des Reglers nur den Bereich von der Frequenz 0 bis zu einer geringen Grenzfrequenz abdecken.

Ist der im eingeschwungenen Zustand gewünschte Verlauf der Regelgrößen aber nicht-sinusförmig, so würden diese Regelgrößen durch die Transformation in das feldorientierte Koordinatensystem nicht zu Gleichgrößen, sondern zu Gleichgrößen mit überlagerten Wechselanteilen, wobei das Spektrum dieser Wechselanteile das 6-fache der Statorgrundfrequenz und ungeradzahlige Vielfache davon umfasst. Es kann sich also je nach Motordrehzahl um sehr hochfrequente Wechselanteile handeln. Da diese Wechselanteile in diesem Fall gewollt wären, müssten sie den feldorientierten Sollgrößen aufmoduliert werden und der Regler müsste einen Frequenzbereich von 0 bis weit oberhalb des 6-fachen der maximalen Statorfrequenz beherrschen. Dies würde den Vorteil einer Regelung in feldorientierten Koordinaten weitgehend zunichtemachen. Ebenso würden feldorientierte Gleich-Stellgrößen bei der Transformation in das Stator orientierte Koordinatensystem in sinusförmige Stellgrößen umgewandelt. Um die gewünschten nicht-sinusförmigen Verläufe der Stellgröße zu erhalten, müssten den feldorientierten Stellgrößen hochfrequente Wechselanteile überlagert werden, die als Grundfrequenz das 6-fache der Statorfrequenz aufweisen. Auch dies konterkariert den größten Vorteil einer Regelung im feldorientierten Koordinatensystem, dass nämlich Regel- und Stellgrößen im eingeschwungenen Zustand lediglich einen Gleichanteil, aber keinerlei Wechselanteile aufweisen.

Dennoch ist diese Vorgehensweise bekannt und wird auch angewendet. Eine auf der Aufmodulation hochfrequenter Wechselanteile basierende Lösung ist z.B. in Lazor, M.; Stulrajter, M.: "Modified Field Oriented Control for Smooth Torque Operation of a BLDC Motor", Tagungsband der IEEE Elektro 2014, 19. - 20.5.2014, Rakecke Teplice (SK), S. 180 - 185, ISBN 978-1-4799-3720-2 beschrieben.

Der vorliegenden Erfindung liegt daher die Idee zugrunde, dieser Erkenntnis Rechnung zu tragen und eine Regelung für eine Synchronmaschine vorzusehen, die eine einfache und effiziente Einspeisung von nicht-sinusförmigen Strömen in die Synchronmaschine unter Verwendung einer feldorientierten Berechnung der Regelgrößen erlaubt. Hierzu sieht die vorliegende Erfindung eine Anpassung der Transformation zwischen statororientiertem Koordinatensystem und feldorientiertem Koordinatensystem vor, wobei die gewünschten Verläufe der Regelgrößen durch die Transformation in das feldorientierte Koordinatensystem in reine Gleichgrößen umgewandelt werden und konstant vorgegebene feldorientierte Stellgrößen durch die Transformation in den gewünschten, nicht-sinusförmigen Verlauf umgewandelt werden.

Auf diese Weise kann ein aufwändiges Aufmodulieren von Wechselanteilen auf feldorientierte Größen unterbleiben und die Reglerstruktur und Reglerdynamik im feldorientierten Koordinatensystem kann gegenüber einem herkömmlichen feldorientierten Regelsystem völlig unverändert bleiben. Bei der Auslegung des Reglers selbst muss dann die Nicht-Sinusform der gewünschten Regelgrößen und der erforderlichen Stellgrößen in keiner Weise berücksichtigt werden.

Durch die Anpassung der Transformationsgleichungen zwischen feldorientiertem Koordinatensystem und statororientiertem Koordinatensystem kann dabei aus einer einfach berechneten Stellgröße ein angepasster Verlauf dieser Stellgröße in dem statororientierten Koordinatensystem generiert werden, der eine optimierte Ansteuerung der Synchronmaschine erlaubt. Insbesondere kann so auf einfache Weise ein geeigneter Strom-/Spannungsverlauf im statororientierten Koordinatensystem bereitgestellt werden, der über den gesamten Polradwinkelbereich einen nahezu konstanten Betrieb ermöglicht. Auf diese Weise kann beispielsweise über den gesamten Polradwinkelbereich ein annähernd konstantes Drehmoment bereitgestellt und damit ein ruckelfreier und geräuscharmer Betrieb ermöglicht werden. Ferner ist auch über den gesamten Polradwinkelbereich beispielsweise ein Betrieb mit einer nahezu konstanten Leistungsaufnahme möglich. Die Anpassung und Abstimmung auf weitere Parameter ist darüber hinaus ebenso möglich.

Gemäß einer Ausführungsform umfasst die Stellgröße in dem statororientierten Koordinatensystem einen nicht-sinusförmigen Stromverlauf und/oder einen nicht-sinusförmigen Spannungsverlauf. Insbesondere kann die Transformation der Stellgröße von dem feldorientierten Koordinatensystem in das Stator orientierte Koordinatensystem Gleichgrößen in nicht-sinusförmige Verläufe für Längsspannung und Querspannung oder Längsstrom und Querstrom umwandeln. Auf diese Weise können die im feldorientierten Koordinatensystem berechneten Stellgrößen auf einfache Weise als Gleichgrößen berechnet werden und anschließend kann aus diesen feldorientierten Gleichgrößen ein insbesondere nicht-sinusförmiger Stellgrößenverlauf in dem statororientierten Koordinatensystem bereitgestellt werden, auf dessen Grundlage ein optimiertes Ansteuern der Synchronmaschine erfolgen kann.

Gemäß einer weiteren Ausführungsform weist der gewünschte Verlauf der Regelgröße in dem statororientierten Koordinatensystem einen nicht-sinusförmigen Verlauf bezüglich des Polradwinkels der Synchronmaschine auf. Erfindungsgemäß wird die Regelgröße bei diesem nicht-sinusförmigen Verlauf durch die Transformation in das feldorientierte Koordinatensystem in Gleichgrößen ohne nennenswerte überlagerte Wechselanteile umgewandelt. Auf diese Weise können auch nicht-sinusförmige Regelgrößen besonders einfach von einem in dem feldorientierten Koordinatensystem arbeitenden Regelsystem verarbeitet und eingestellt werden.

Gemäß einer weiteren Ausführungsform umfasst das Verfahren zur Regelung der Synchronmaschine einen Schritt zum Ermitteln eines induzierten Spannungsverlaufs der stromlos rotierenden Synchronmaschine. Der induzierte Spannungsverlauf wird insbesondere in Abhängigkeit vom Polradwinkel der Synchronmaschine ermittelt. Basierend auf dem ermittelten induzierten Spannungsverlauf der Synchronmaschine kann der Schritt zum Berechnen der Stellgröße für die Ansteuerung der Synchronmaschine die Stellgröße unter Verwendung des ermittelten induzierten Spannungsverlaufes berechnen. Auf diese Weise ist insbesondere bei nicht-sinusförmigen induzierten Spannungsverläufen eine Anpassung der Ansteuerung der Synchronmaschine für einen optimierten Betrieb mit einem nahezu konstanten Drehmoment, einer konstanten Leistungsaufnahme oder weiteren Parametern möglich.

Gemäß einer Ausführungsform umfasst die Regelvorrichtung eine Speichereinrichtung. Die Speichereinrichtung ist dazu ausgelegt, Transformationswerte für eine Transformation zwischen dem statororientierten Koordinatensystem und dem feldorientierten Koordinatensystem abzuspeichern. Die erste Transformationseinrichtung und/oder die zweite Transformationseinrichtung kann in diesem Fall die Transformation unter Verwendung der abgespeicherten Transformationswerte ausführen. Auf diese Weise kann eine besonders einfache Transformation zwischen Werten im feldorientierten Koordinatensystem und nicht-sinusförmigen Funktionen im statororientierten Koordinatensystem durchgeführt werden.

Bei den in der Beschreibung verwendeten Begriffe Regelgrößen und Stellgrößen handelt es sich üblicherweise um mehrphasige Größen, die gemäß dem Stand der Technik durch auf unterschiedliche Koordinatensysteme bezogene Vektoren beschreibbar sind. Dabei werden in dieser Beschreibung die Begriffe "Stellgröße" und "Regelgröße" im synonym sowohl für Einzelkomponenten der jeweiligen Vektoren, wie auch für die Vektoren als Ganzes verwendet.

In der gesamten Beschreibung wird der besseren Verständlichkeit halber der Begriff "Polradwinkel" stets im Sinne eines "elektrischen Polradwinkels" benutzt.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:

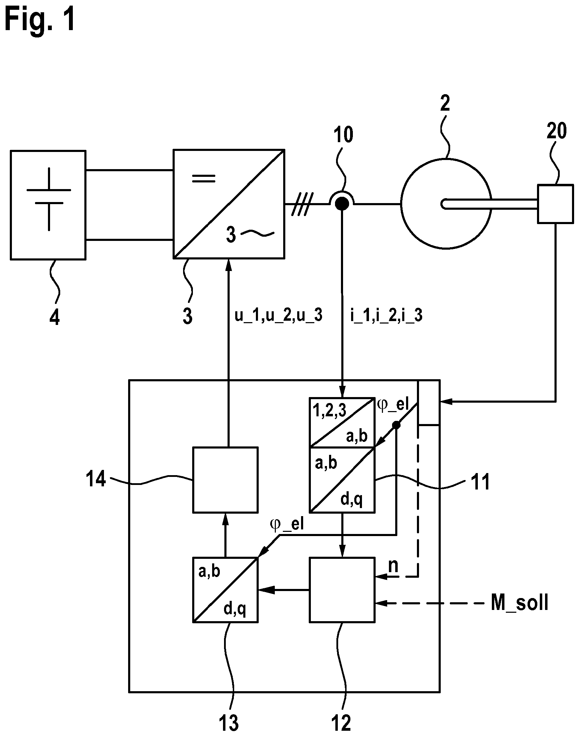

Figur 1:      eine schematische Darstellung eines elektrischen Antriebssystems mit einer Regelvorrichtung gemäß einer Ausführungsform;

| Figur 2a,b: | eine Darstellung eines dreiphasigen Zeigerdiagramms mit den Achsen 1, 2 und 3, des zugehörigen orthogonalen Koordinatensystems mit den Achsen a = 1 und b sowie des mit dem Rotor umlaufenden und deshalb um den Polradwinkel $\varphi\_el$ gedrehten, feldorientierten Koordinatensystems mit der Längsachse d und der Querachse q; |
| Figur 3: | eine schematische Darstellung eines Ablaufdiagramms, wie es einem Verfahren zur Regelung einer Synchronmaschine gemäß einer Ausführungsform zugrunde liegt; |
| Figur 4: | eine Darstellung für einen normierten Verlauf der Statorströme i_d,a0($\varphi$_el) und i_d,b0($\varphi$_el) im orthogonalen Koordinatensystem (a,b) über dem Polradwinkel, die zu einem konstantem feldorientiertem Istwert des Längsstroms i_d und zu einem feldorientierten Istwert des Querstroms i_q = 0 führen; |
| Figur 5: | eine Darstellung für eine Verlauf der Statorströme i_q,a0($\varphi$_el) und i_q,b0($\varphi$_el) im orthogonalen Koordinatensystem (a,b) über dem Polradwinkel, die zu einem konstantem feldorientiertem Istwert des Querstroms i_q und zu einem feldorientierten Istwert des Längsstroms i_d = 0 führen; |
| Figur 6: | eine Darstellung für einen normierten Verlauf der einzustellenden Querspannungen u_q,a0($\varphi$_el) und u_q,b0($\varphi$_el) bei konstantem feldorientiertem Sollwert u_q im orthogonalen Koordinatensystem (a,b) über dem Polradwinkel; und |
| Figur 7: | eine Darstellung für einen normierten Verlauf der einzustellenden Längsspannungen u_d,a0($\varphi$_el) und u_d,b0($\varphi$_el) bei konstantem feldorientiertem Sollwert u_d im orthogonalen Koordinatensystem (a,b) über dem Polradwinkel. |

Ausführungsformen der Erfindung

Figur 1 zeigt eine schematische Darstellung eines elektrischen Antriebssystems mit einer Regelvorrichtung 1 für eine Synchronmaschine 2 gemäß einer Ausführungsform. Das elektrische Antriebssystem umfasst neben der Regelvorrichtung 1 und der Synchronmaschine 2 einen Umrichter 3, der entsprechend seiner Ansteuerung eine Eingangsspannung des Umrichters 3 in eine Ausgangsspannung konvertiert und die Ausgangsspannung des Umrichters 3 an der Synchronmaschine 2 bereitstellt. Der Umrichter 3 wird dabei von einer elektrischen Energiequelle 4, beispielsweise einer Batterie gespeist. Insbesondere kann die Batterie hierbei beispielsweise eine Traktionsbatterie eines Elektro- oder Hybridfahrzeuges umfassen. Das elektrische Antriebssystem, wie es hier dargestellt und nachfolgend beschrieben wird, kann beispielsweise als Antriebssystem eines Elektro- oder Hybridfahrzeuges eingesetzt werden. Darüber hinaus kann das elektrische Antriebssystem jedoch auch in beliebigen weiteren Anwendungsgebieten eingesetzt werden und ist nicht auf die Anwendung in einem Elektro- oder Hybridfahrzeug beschränkt. Bei der Synchronmaschine 2 kann es sich beispielsweise um eine dreiphasige Synchronmaschine handeln. Darüber hinaus sind jedoch auch Synchronmaschinen mit einer von drei abweichenden Anzahl von Phasen möglich. Zur Ansteuerung der Synchronmaschine 2 kann der Umrichter 3 sowohl von einer Gleichspannungsquelle als auch von einer Wechselspannungsquelle gespeist werden.

Die Regelvorrichtung 1 für die Synchronmaschine 2 erhält Messwerte von Spannungs- und/oder Stromsensoren 10, die die an der Synchronmaschine 2 anliegenden Spannungen und/oder die in die Synchronmaschine 2 eingeprägten Ströme erfassen, sowie ein Signal von einem Rotorlagegeber 20, der ein zum Polradwinkel $\varphi$_el der Synchronmaschine 2 korrespondierendes Ausgangssignal bereitstellt. Basierend auf diesen Werten kann die Regeleinrichtung 1 entsprechend einem vorgegebenen Sollwert M, beispielsweise einem einzustellenden Drehmoment oder einer einzustellenden Leistungsaufnahme sowie gegebenenfalls weiteren Parametern, eine Stellgröße für die Synchronmaschine 2 bestimmen. Insbesondere kann die Regelvorrichtung 1 beispielsweise die an der Synchronmaschine 2 durch den Umrichter 3 einzustellenden Spannungen bzw. die in die Synchronmaschine 2 einzubringenden Ströme berechnen und den Umrichter 3 entsprechend steuern.

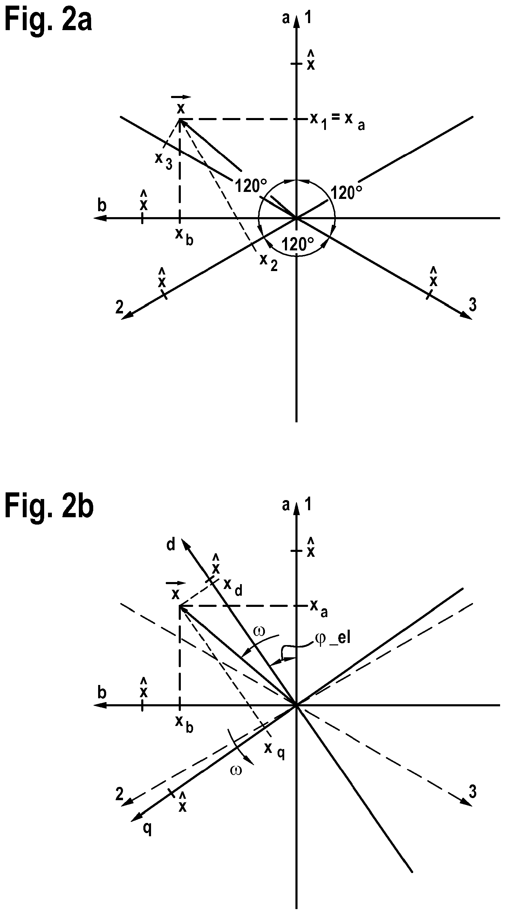

Zur Erfassung der Regelgrößen können die Regelgrößen, beispielsweise Stromwerte und/oder Spannungswerte in den einzelnen Phasen der Synchronmaschine 2 mittels geeigneter Sensoren 10 erfasst werden. Da die Komponenten einer zum Beispiel dreiphasigen elektrischen Größe, wie Strom oder Spannung, in der Summe stets Null ergeben, können diese in einem Zeigerdiagramm in einer Ebene dargestellt werden. Dieses Zeigerdiagramm ist in Figur 2a dargestellt. Es weist eine der Phasenanzahl m entsprechende Anzahl von gegeneinander um jeweils 360 Grad/m gedrehten Achsen auf. Im hier dargestellten Beispiel mit drei Phasen sind diese Achsen also um jeweils 120 Grad gegeneinander versetzt. Jede Momentanwertkombination eines dreiphasigen Größensystems kann durch einen Vektor (Zeiger) in der Ebene dargestellt werden. Die drei Komponenten dieses Vektors, die durch Projektion des Vektors auf die jeweilige Achse ermittelt werden, weisen stets die Summe 0 auf. Ein sinusförmiges, dreiphasiges Stromsystem kann folglich durch einen mit konstanter Winkelgeschwindigkeit umlaufenden Vektor konstanter Amplitude dargestellt werden.

Derselbe Vektor kann auch nur durch die zwei Komponenten auf den Achsen a und b des orthogonalen Koordinatensystems eindeutig beschrieben werden. Zwischen den dreiphasigen Größen x_1, x_2, x_3 mit x_1 + x_2 + x_3 = 0 und den Vektorkomponenten x_a und x_b im orthogonalen, statororientierten Koordinatensystem mit den Achsen a und b bestehen in bekannter Weise folgende Beziehungen:

x_a = x_1 *und*

$$x\_b = (x\_1 + 2 \cdot x\_2)/\sqrt{3}$$

und umgekehrt:
x_1 = x_a,

$$x\_2 = (-x\_a + \sqrt{3} \cdot x\_b)/2$$

*und*

$$x\_3 = -(x\_a + \sqrt{3} \cdot x\_b)/2 \quad .$$

Schließlich sind im ebenfalls orthogonalen, feldorientierten Koordinatensystem dessen Achsen d und q um den Polradwinkel φ_el gegenüber den statororientierten Achsen a und b gedreht. Dieses feldorientierte Koordinatensystem ist in Figur 2b dargestellt.

Für die Berechnung der Stellgrößen für die Synchronmaschine 2, insbesondere für die Ansteuerung des Umrichters 3, der die Synchronmaschine 2 speist, hat es sich als zweckmäßig erwiesen, die Berechnung in diesem feldorientierten Koordinatensystem auszuführen. Für sinusförmige Signalverläufe sowohl der Stellgröße als auch der Regelgröße ist eine derartige Transformation zwischen dem statororientierten Koordinatensystem, in dem die Synchronmaschine betrieben wird, und dem feldorientierten Koordinatensystem, in dem die Stellgrößen berechnet werden, als "Park-Transformation" bekannt. Dabei werden konstante feldorientierte Spannungs-Sollwerte für eine Längsspannung u_d und eine Querspannung u_q in sinusförmige Spannungs-Sollwerte u_a und u_b in einem statororientierten Koordinatensystem umgewandelt. Diese Spannungs-Sollwerte u_a und u_b im statororientierten Koordinatensystem können dann noch in mehrphasige Größen, beispielsweise in drei jeweils um 120° phasenverschobene Spannungen u_1, u_2 und u_3 eines dreiphasigen Systems umgerechnet und dann dem Umrichter 3 als Stellgrößen zugeführt werden.

Für eine mehrphasige Größe x lauten die Gleichungen der Park-Transformation für die Transformation vom feldorientierten in das Stator orientierte Koordinatensystem:

$$x\_a = x\_d * \cos(\varphi\_el) - x\_q * \sin(\varphi\_el)$$

und

$$x\_b = x\_d * \sin(\varphi\_el) + x\_q * \cos(\varphi\_el) \ .$$

Für die Transformation vom statororientierten in das feldorientierte Koordinatensystem gilt umgekehrt:

$$x\_d = x\_a * \cos(\varphi\_el) + x\_b * \sin(\varphi\_el)$$

und

$$x\_q = -x\_a * \sin(\varphi\_el) + x\_b * \cos(\varphi\_el) \ .$$

Weisen die von den Spannungs-/Stromsensoren 10 erfassten Messwerte in Bezug auf den Polradwinkel der Synchronmaschine 2 keinen sinusförmigen Verlauf auf, so werden die Messwerte nach dieser konventionellen Transformation wie z.B. einer Park-Transformation von dem statororientierten Koordinatensystem in ein feldorientiertes Koordinatensystem neben dem Gleichanteil noch zusätzlich einen oder mehrere höherfrequente Frequenzanteile aufweisen. Die Grundfrequenz dieser höherfrequenten Frequenzanteile beträgt das Sechsfache der Statorfrequenz. Sie kann folglich abhängig von der Drehzahl der Synchronmaschine sehr stark schwanken und dabei auch sehr große Werte von mehreren Kiloherz annehmen. Ist ein nicht-sinusförmiger Verlauf der Messgrößen im statororientierten Koordinatensystem erwünscht, dann könnte dies theoretisch dadurch erreicht werden, dass die zugehörigen, drehzahlabhängig hochfrequenten Wechselanteile den Sollwerten für diese Messgrößen im feldorientierten Koordinatensystem aufmoduliert werden. Da dieser hochfrequente Bereich aber von einem Regler normalerweise nicht abgedeckt werden kann, führt dies dazu, dass trotzdem in der Realität nur ein sinusförmiger Verlauf der Messwerte eingeprägt wird. Ausgenommen davon wäre nur der Bereich sehr geringer Drehzahlen, wenn die Frequenz dieser Wechselanteile sehr niedrig ist. Um diesem Phänomen entgegenzuwirken, kann erfindungsgemäß die Transformation zwischen dem statororientierten Koordinatensystem und dem feldorientierten Koordinatensystem angepasst werden. Beispielsweise kann eine von einem Strom- oder Spannungssensor 10 erfasste Regelgröße der Synchronmaschine 2 einer Messeinrichtung bereitgestellt werden, die daraufhin die Messwerte der Strom- oder Spannungssensoren (z.B. die Messwerte der Ströme i_1, i_2, i_3) erfasst und daraus eine Regelgröße im statororientierten a-b-Koordinatensystem berechnet (z.B. als i_a und i_b) und einer ersten Transformationseinrichtung 11 bereitstellt. Diese erste Transformationseinrichtung 11 kann daraufhin die erfasste Regelgröße in geeigneter Weise in ein feldorientiertes Koordinatensystem transformieren, derart, dass ein gewünschter, nicht-sinusförmiger Verlauf der Regelgröße im statororientierten Koordinatensystem mit den Achsen a und b in reine Gleichgrößen im feldorientierten Koordinatensystem mit den Achsen d und q transformiert wird. Diese Transformation kann dabei insbesondere einen bekannten, nicht-sinusförmigen Verlauf der Regelgröße berücksichtigen. Beispielsweise kann eine Transformation von statororientierten Strömen i_a und i_b in das feldorientierte Koordinatensystem mit den Koordinaten d und q gemäß den folgenden Gleichungen ausgeführt werden:

$$i\_d \; = \; (i\_a \cdot i\_q, b0 \, (\varphi\_el) \; - \; i\_b \cdot i\_q, a0 \, (\varphi\_el))/(N(\varphi)),$$

$$i\_q \; = \; (i\_b \cdot i\_d, a0 \, (\varphi\_el) \; - \; i\_a \cdot i\_d, b0 \, (\varphi\_el))/(N(\varphi)),$$

mit

$$N(\varphi) \; = \; i\_d, a0 \, (\varphi\_el) \cdot i\_q, b0 \, (\varphi\_el) \; - \; i\_d, b0 \, (\varphi\_el) \cdot i\_q, a0 \, (\varphi\_el)$$

Dabei handelt es sich bei i_q, a0($\varphi$_el) und i_q, b0($\varphi$el) um die gewünschten Verläufe der normierten Querströme und bei i_d, a0($\varphi$_el) und i_d, b0($\varphi$_el) um die gewünschten Verläufe der normierten Längsströme im statororientierten Koordinatensystem. Auf diese Weise ist sichergestellt, dass im eingeschwungenen Zustand die Regelgrößen im feldorientierten Koordinatensystem genau dann als reine Gleichgrößen behandelt werden, wenn deren Verlauf im statororientierten Koordinatensystem genau dem gewünschten Verlauf entspricht.

Die Umrechnung der erfassten dreiphasigen Messgrößen x_1, x_2 und x_3 in die Komponenten x_a und x_b des zugehörigen Vektors im statororientierten Koordinatensystem und deren darauf folgende, erfindungsgemäße Transformation in das feldorientierte Koordinatensystem können auch zusammengefasst werden und in einem Rechenschritt erfolgen.

Nachdem die erfassten Regelgrößen der Synchronmaschine 2, insbesondere die statororientierten Ist-Ströme, wie sie in die Synchronmaschine eingeprägt werden, durch die erste Transformationseinrichtung 11 in ein feldorientiertes Koordinatensystem transformiert sind, kann daraufhin in einer Recheneinrichtung 12 ein Sollwert für eine Stellgröße der Synchronmaschine berechnet werden. Die Berechnung des Sollwerts für die Ansteuerung der Synchronmaschine kann dabei beispielsweise auf beliebige, gegebenenfalls bereits bekannte Verfahren zurückgreifen. So kann beispielsweise der Recheneinrichtung ein Sollwert M_soll für das Drehmoment der Synchronmaschine zugeführt werden. Aus diesem Sollwert und eventuell weiteren Messwerten, wie der Drehzahl der Synchronmaschine 2, können intern Sollwerte für die Regelgrößen im feldorientierten Koordinatensystem bestimmt werden. Die Recheneinrichtung kann dann aus diesen Soll- und Istwerten der Regelgröße und gegebenenfalls zusätzlichen Informationen, wie beispielsweise der Drehzahl der Synchronmaschine, dann die Sollwerte für die Stellgröße in dem feldorientierten Koordinatensystem berechnen. Durch die vorherige angepasste Transformation der Istwerte von dem statororientierten Koordinatensystem in das feldorientierte Koordinatensystem liegen in dem feldorientierten Koordinatensystem im eingeschwungenen Zustand Istwerte mit einem reinen Gleichanteil vor, wenn die Istwerte im statororientierten Koordinatensystem genau die gewünschten, nicht-sinusförmigen Verläufe aufweisen. Dadurch kann die Berechnung der Stellgröße für die Ansteuergröße der Synchronmaschine besonders einfach in bekannter Weise durchgeführt werden. Die Recheneinrichtung 12 muss die gewünschten nicht-sinusförmigen Verläufe der Regel- und/oder Stellgrößen in keiner Weise berücksichtigen und kann genauso ausgeführt werden, wie dies für Systeme mit sinusförmigen Verläufen der Regel- und Stellgrößen bekannt ist.

Nachdem die Berechnung der Stellgröße im feldorientierten Koordinatensystem für die Ansteuerung der Synchronmaschine 2 in der Recheneinrichtung 12 erfolgt ist, kann die berechnete Stellgröße, beispielsweise ein Längsspannungsverlauf u_d und ein Querspannungsverlauf u_q von dem feldorientierten Koordinatensystem in das Stator orientierte Koordinatensystem durch die zweite Transformationseinrichtung 13 zurücktransformiert werden. Auch hierbei kann eine Anpassung der Transformation zwischen dem feldorientierten d-q-Koordinatensystem und dem statororientierten a-b-Koordinatensystem erfolgen.

Mit den auf den gewünschten nicht-sinusförmigen Verlauf angepassten normierten Längsspannungsverläufen u_d, a0($\varphi$_el) und u_d, b0($\varphi$_el) sowie den normierten Querspannungsverläufen u_q, a0($\varphi$_el) und u_q, b0($\varphi$_el) kann die angepasste Transformation in der zweiten Transformationseinrichtung 13 beispielsweise wie folgt ausgeführt werden:

$$u\_a = u\_d \cdot u\_d, a0\,(\varphi\_el) + u\_q \cdot u\_q, a0\,(\varphi\_el),$$

$$u\_b = u\_d \cdot u\_d, b0\,(\varphi\_el) + u\_q \cdot u\_q, b0\,(\varphi\_el).$$

Dadurch ist gewährleistet, dass im statororientierten Koordinatensystem die Stellgrößen im eingeschwungenen Zustand, also wenn sie im feldorientierten Koordinatensystem als reine Gleichgrößen vorliegen, exakt den gewünschten Verlauf über den Polradwinkel $\varphi$_el aufweisen. Eine zusätzliche Modulation der Stellgrößen ist weder im feldorientierten noch im statororientierten Koordinatensystem erforderlich. Insgesamt führt das System durch die erfindungsgemäße Ausführung der Transformationen exakt zu den gewünschten, nicht-sinusförmigen Verläufen der Ströme und Spannungen der Synchronmaschine 2 ohne dass am eigentlichen Regelsystem, der Recheneinrichtung 12, das basierend auf dem feldorientierten Koordinatensystem arbeitet, Modifikationen vorgenommen werden müssen. Das eigentliche Regelsystem arbeitet somit unabhängig von den einzuprägenden Strom- und Spannungsverläufen. Diese gewünschten Strom- und Spannungsverläufe werden ausschließlich durch die Vorgaben i_d,a0($\varphi$_el), i_d,b0($\varphi$el), i_q,a0($\varphi$_el) und i_q,b0($\varphi$_el) in der Transformationseinrichtung 11 sowie u_d,a0($\varphi$el), u_d,b0($\varphi$_el), u_q,a0($\varphi$_el) und u_q,b0($\varphi$_el) in der Transformationseinrichtung 13 festgelegt.

Basierend auf den vom feldorientierten Koordinatensystem in das Stator orientierte Koordinatensystem transformierten Stellgrößen in Form von Sollwerten, beispielsweise für die Längsspannungen und Querspannungen kann daraufhin eine Ansteuerung der Synchronmaschine 2 erfolgen. Hierzu werden die nun in statororientierten Koordinaten vorliegenden Stellgrößen, beispielsweise die Spannungsverläufe u_a und u_b bzw., u_1, u_2 und u_3 von der Steuerelektronik des Umrichters 3 in bekannter Weise in Ansteuerimpulse für dessen Leistungsschalter umgesetzt, so dass sich genau diese Spannungen an den Ausgangsklemmen des Umrichters 3 auch einstellen.

Besonders vorteilhaft ist es hierbei, wenn zwischen den normierten Querstromverläufen und den normierten Längsspannungsverläufen der folgende Zusammenhang gilt:

$$u\_d, a0\,(\varphi\_el) \sim (d\,i\_q, a0\,d\,i\_q, a0(\varphi\_el))/d\,\varphi\_el\;,$$

und

$$u\_d, b0\,(\varphi\_el) \sim (d\,i\_q, b0\,(\varphi\_el))/d\,\varphi\_el$$

und wenn darüber hinaus zwischen den normierten Längsstromverläufen und den normierten Querspannungsverläufen der folgende Zusammenhang gilt:

$$u\_q, a0\,(\varphi\_el) \sim (d\,i\_d, a0\,(\varphi\_el))/d\varphi\_el\;,$$

und

$$u\_q, b0\,(\varphi\_el) \sim (di\_d, b0\,(\varphi\_el))/d\varphi\_el\,.$$

Mit anderen Worten, wenn der vom Polradwinkel φ_el der Synchronmaschine 2 abhängige normierte Längsspannungsverlauf proportional zum Gradienten des Querstromverlaufs nach dem Polradwinkel φ_el der Synchronmaschine verläuft und der normierte Querspannungsverlauf proportional zur Änderung des Längsstromverlaufs in Bezug auf den Polradwinkel φ_el der Synchronmaschine ist.

Für eine effiziente Transformation zwischen dem feldorientierten Koordinatensystem und dem statororientierten Koordinatensystem können die normierten Stromverläufe und die normierten Spannungsverläufe beispielsweise in Form einer Lookup-Tabelle oder ähnlichem in einer Speichereinrichtung der Regelvorrichtung 1 abgespeichert werden. Insbesondere können dabei die normierten Strom- und Spannungsverläufe über den Polradwinkel φ_el abgelegt werden.

Die erfindungsgemäße Transformation vom feldorientierten Koordinatensystem mit den Achsen d und q in das Stator orientierte Koordinatensystem mit den Achsen a und b und die darauf folgende Umrechnung dieses Ergebnis in die Werte des dreiphasigen Zeigerdiagramms mit den Achsen 1, 2 und 3 können auch in einem Rechenschritt erfolgen.

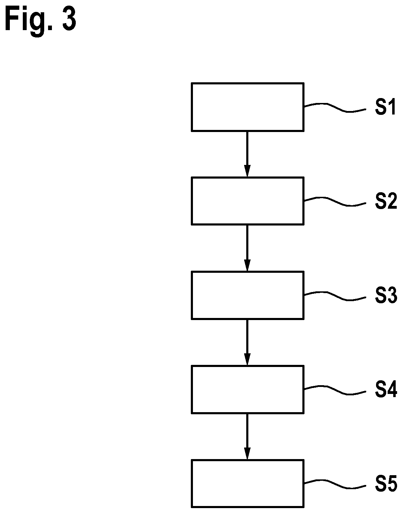

Figur 3 zeigt eine schematische Darstellung eines Ablaufdiagramms, wie es einem Verfahren zur Regelung einer Synchronmaschine 2 gemäß einer Ausführungsform zugrunde liegt. Zunächst werden in Schritt S1 Messwerte einer Regelgröße der Synchronmaschine 2 in einem statororientierten Koordinatensystem erfasst. Hierzu können beispielsweise Strom-Ist-Werte in den einzelnen Phasen der Synchronmaschine 2 gemessen werden und basierend auf diesen Messwerten die Strom-Ist-Werte in einem statororientierten a-b-Koordinatensystem in bekannter Weise berechnet und bereitgestellt werden. In Schritt S2 erfolgt daraufhin eine Transformation der in dem statororientierten Koordinatensystem erfassten Messwerte in ein feldorientierendes d-q-Koordinatensystem. Hierbei können insbesondere nicht-sinusförmige Signalverläufe der erfassten Messwerte berücksichtigt werden und die Transformationsgleichungen der Messwerte von dem statororientierten Koordinatensystem in das feldorientierte Koordinatensystem können entsprechend diesem gewünschten, nicht-sinusförmigen Signalverlauf angepasst sein.

In Schritt S3 erfolgt daraufhin eine Berechnung einer Stellgröße für die Ansteuerung der Synchronmaschine 2 in dem feldorientierten Koordinatensystem. Anschließend erfolgt in Schritt S4 eine Transformation der berechneten Stellgröße von dem feldorientierten Koordinatensystem in das Stator orientierte Koordinatensystem. Auch diese Transformation der berechneten Stellgröße von dem feldorientierten Koordinatensystem in das Stator orientierte Koordinatensystem erfolgt mit angepassten Transformationsgleichungen, die den nicht-sinusförmigen Signalverlauf berücksichtigt.

Basierend auf den vom feldorientierten Koordinatensystem in das Stator orientierte Koordinatensystem transformierten Stellgrößen erfolgt daraufhin in Schritt S5 eine Ansteuerung des Umrichters 3 und damit die Einprägung der Stellgrößen an den Statoranschlüssen der Synchronmaschine 2.

Die Transformation zwischen dem statororientierten Koordinatensystem und dem feldorientierten Koordinatensystem kann auf beliebige nicht-sinusförmige Signalverläufe, insbesondere vom Polradwinkel φ_el der Synchronmaschine 2 abhängige Signalverläufe angepasst sein. Beispielsweise kann die Transformation zwischen dem statororientierten Koordinatensystem und dem feldorientierten Koordinatensystem auf einen trapezförmigen Signalverlauf angepasst sein.

Gegebenenfalls kann der nicht-sinusförmige Signalverlauf auf eine vorgegebene Anzahl von Oberschwingungen bezüglich einer Grundfrequenz des Signalverlaufs begrenzt werden. Beispielsweise kann der Signalverlauf Oberschwingungen bis zur maximal, fünften, siebten, elften oder dreizehnten Ordnung enthalten, während Oberschwingungen höherer Ordnungen nicht enthalten oder stark in ihrer Amplitude gedämpft sind. Weitere Möglichkeiten zur Modifikation des Signalverlaufs sind darüber hinaus selbstverständlich ebenso möglich.

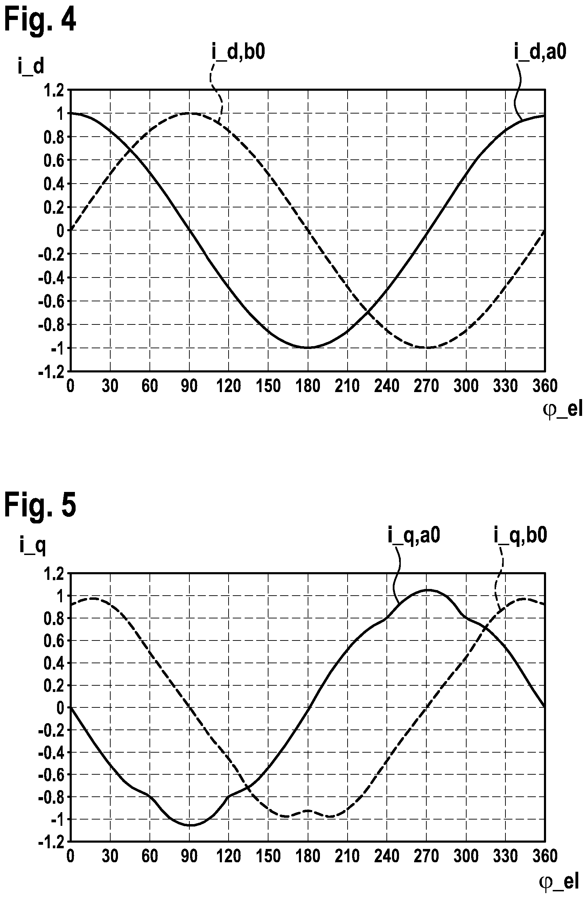

Die Figuren 4 bis 7 zeigen für ein konkretes Ausführungsbeispiel Signalverläufe der normierten Längs- und Querströme im statororientierten Koordinatensystem, die einer Synchronmaschine eingeprägt werden sollen sowie der normierten Längs- und Querspannungen, die zum Einprägen dieser Stromverläufe bevorzugt an den Statorklemmen der Synchronmaschine 2 anzulegen sind, jeweils als Funktion des Polradwinkels φ_el.

Figur 4 zeigt dabei die Verläufe der normierten Längsstromkomponenten i_d,a0(φ_el) und i_d,b0(φ_el), die der Synchronmaschine durch das feldorientierte Regelsystem im eingeschwungenen Zustand eingeprägt werden sollen. Diese sind in diesem Ausführungsbeispiel proportional zu den Verläufen der magnetischen Statorflussverkettung bei unbestromter Statorwicklung über dem Polradwinkel φ_el. Sie ergeben sich also hier direkt aus dem Aufbau der Maschine, insbesondere aus der Anordnung der Permanentmagnete im Rotor und der Ausführung der Statorwicklung.

Figur 5 zeigt die Verläufe der normierten Querstromkomponenten i_q,a0(φ_el) und i_q,b0(φ_el), die der Synchronmaschine durch das feldorientierte Regelsystem im eingeschwungenen Zustand eingeprägt werden sollen. Diese sind in diesem Ausführungsbeispiel so gewählt, dass sie im Zusammenwirken mit dem Feld der Permanentmagnete im Rotor ein vom Polradwinkel φ_el unabhängiges, also konstantes Drehmoment bewirken.

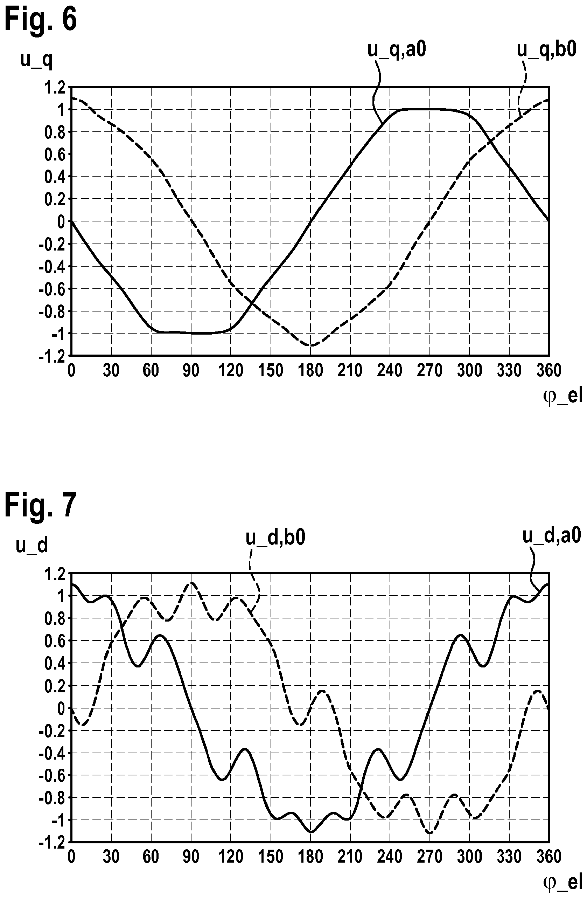

Figur 6 zeigt die Verläufe der normierten Querspannungskomponenten u_q,a0(φ_el) und u_q,b0(φ_el), die der Synchronmaschine durch das feldorientierte Regelsystem im eingeschwungenen Zustand, also bei konstantem feldorientiertem Spannungswert u_q, eingeprägt werden sollen. Diese sind in diesem Ausführungsbeispiel so gewählt, sie zu einem Längsstromverlauf führen, der dem in Figur 4 dargestellten normierten Stromverlauf entspricht. Sie sind damit auch proportional zu den Spannungen, die bei im stromlosen Zustand drehender Synchronmaschine 2 durch das Magnetfeld der Permanentmagnete im Rotor in deren Statorwicklung induziert werden.

Figur 7 zeigt die Verläufe der normierten Längsspannungskomponenten u_d,a0($\varphi$_el) und u_d,b0($\varphi$_el), die der Synchronmaschine durch das feldorientierte Regelsystem im eingeschwungenen Zustand, also bei konstantem feldorientiertem Spannungswert u_d, eingeprägt werden sollen. Diese sind in diesem Ausführungsbeispiel so gewählt, sie zu einem Querstromverlauf führen, der dem in Figur 5 dargestellten normierten Stromverlauf entspricht.

In einer Ausführungsform der Erfindung sind die Signalverläufe i_d,a0($\varphi$_el); i_d,b0($\varphi$_el); i_q,a0($\varphi$_el); i_q,b0($\varphi$_el); u_d,a0($\varphi$_el); u_d,b0($\varphi$_el); u_q,a0($\varphi$_el) und u_q,b0($\varphi$_el) über die Lebensdauer der Synchronmaschine bzw. des Regelsystems unveränderlich vorgegeben.

In einer weiteren Ausführungsform der Erfindung können die Signalverläufe i_d,a0($\varphi$_el); i_d,b0($\varphi$_el); i_q,a0($\varphi$_el); i_q,b0($\varphi$_el); u_d,a0($\varphi$_el); u_d,b0($\varphi$_el); u_q,a0($\varphi$_el) und u_q,b0($\varphi$el) über die Lebensdauer der Synchronmaschine hinweg und gegebenenfalls auch in Abhängigkeit von Umgebungsparametern, wie z.B. einer Temperatur, veränderlich vorgegeben sein. Insbesondere kann der Verlauf der in der Statorwicklung der stromlos drehenden Synchronmaschine induzierten Spannung über die Lebensdauer hinweg und/oder bei sich verändernden Umgebungsparametern immer wieder gemessen werden und im Falle einer Veränderung können die genannten Signalverläufe an diesen geänderten verlauf der induzierten Spannung angepasst werden.

In einer weiteren bevorzugten Ausführungsform der Erfindung können die Signalverläufe i_d,a0($\varphi$_el); i_d,b0($\varphi$_el); i_q,a0($\varphi$_el); i_q,b0($\varphi$_el); u_d,a0($\varphi$_el); u_d,b0($\varphi$_el); u_q,a0($\varphi$_el) und u_q,b0($\varphi$_el) in Abhängigkeit vom Betriebspunkt der Synchronmaschine variiert werden. Insbesondere können beim Auftreten eines Reluktanzmoments in der Synchronmaschine die Signalformen an den Anteil des Reluktanzmoments M_R am Gesamtmoment M = M_R + M_S angepasst werden.

In einem Ausführungsbeispiel hierzu seien die Signalverläufe, die zu einem konstanten, vom Polradwinkel unabhängigen Synchronmoment M_S führen, mit i*_d,a0($\varphi$_el); i*_d,b0($\varphi$_el); i*_q,a0($\varphi$_el); i*_q,b0($\varphi$_el); u*_d,a0($\varphi$_el); u*_d,b0($\varphi$_el); u*_q,a0($\varphi$_el) und u*_q,b0($\varphi$_el) bezeichnet. Für ein konstantes Reluktanzmoment M_R wären dagegen die normierten Signalverlaufsformen x_d,a0($\varphi$_el) = x_q,b0($\varphi$_el) = cos($\varphi$_el); x_d,b0($\varphi$_el) = sin($\varphi$_el) und x_q,a0($\varphi$_el) = -sin($\varphi$_el) erforderlich. Dabei steht die Variable x als Platzhalter für eine beliebige elektrische oder magnetische Größe, wie z.B. einen Strom i, eine Spannung u, eine magnetische Flussverkettung Y oder eine Durchflutung $\Theta$. Bevorzugt werden nun in Abhängigkeit vom Anteil des Reluktanzmoments am Gesamtmoment der Synchronmaschine die normierten Signalformen vorgegeben ZU:

$$x\_d,a0\,(\varphi\_el) = (M\_R \cdot \cos(\varphi\_el) + M_S \cdot x\_d,a0*(\varphi\_el))/(M\_R + M\_S);$$

$$x\_q,b0\,(\varphi\_el) = (M\_R \cdot \cos(\varphi\_el) + M_S \cdot x\_q,b0*(\varphi\_el))/(M\_R + M\_S);$$

$$x\_d,b0\,(\varphi\_el) = (M\_R \cdot \sin(\varphi\_el) + M_S \cdot x\_d,b0*(\varphi\_el))/(M\_R + M\_S);$$

$$x\_q,a0\,(\varphi\_el) = (-M\_R \cdot \sin(\varphi\_el) + M_S \cdot x\_q,a0*(\varphi\_el))/(M\_R + M\_S).$$

Zusammenfassend betrifft die vorliegende Erfindung eine Regelung einer Synchronmaschine mit nicht-sinusförmigen Strom-Spannungsverläufen. Die Regelung der Synchronmaschine erfolgt in einem feldorientierten Koordinatensystem. Hierbei erfolgt die Transformation zwischen feldorientiertem Koordinatensystem und statororientierten Koordinatensystem durch spezielle, angepasste Transformationsgleichungen, die die nicht-sinusförmigen Signalverläufe bei der Ansteuerung der Synchronmaschine berücksichtigen.

**Patentansprüche**

1. Verfahren zur Regelung einer Synchronmaschine (2), mit den Schritten:

   Erfassen (S1) eines Messwerts einer Regelgröße der Synchronmaschine (2) in einem statororientierten Koordinatensystem;
   Transformieren (S2) des erfassten Messwerts von dem statororientierten Koordinatensystem in ein feldorientiertes Koordinatensystem;
   Berechnen (S3) einer Stellgröße (u_1; u_2; u_3) für die Ansteuerung der Synchronmaschine (2) in dem feldorientierten Koordinatensystem;

Transformieren (S4) der berechneten Stellgröße von dem feldorientierten Koordinatensystem in das Stator orientierte Koordinatensystem; und

Ansteuern (S5) der Synchronmaschine (2) basierend auf der in das Stator orientierte Koordinatensystem transformierten Stellgröße, **dadurch gekennzeichnet, daß** die Transformation der berechneten Stellgröße (u_1; u_2; u_3) von dem feldorientierten Koordinatensystem in das Stator orientierte Koordinatensystem eine Transformation in einen bezüglich eines Polradwinkels der Synchronmaschine (2) nicht-sinusförmigen Verlauf der Stellgröße in dem statororientierten Koordinatensystem umfasst, sodass sich eine nicht sinusförmige Funktion als Funktion der Stellgröße (u_1; u_2; u_3) in Abhängigkeit von dem Polradwinkel der Synchronmaschine in dem statororientierten Koordinatensystem ergibt,

und wobei ein konstanter Wert x_d der feldorientierten Längskomponente der Stellgröße (u_1; u_2; u_3) zu normierten Verläufen x_d,a0($\varphi$_el) und x_d,b0($\varphi$_el) im statororientierten Koordinatensystem führt und wobei ein konstanter Wert x_q der feldorientierten Querkomponente der Stellgröße (u_1; u_2; u_3) zu normierten Verläufen x_q,a0($\varphi$_el) und x_q,b0($\varphi$_el) im statororientierten Koordinatensystem führt und wobei die normierten Verläufe x_d,a0($\varphi$_el), x_d,b0($\varphi$_el), x_q,a0($\varphi$_el) und x_q,b0($\varphi$_el) mindestens einen nicht-sinusförmigen Verlauf umfassen.

2. Verfahren nach Anspruch 1, wobei die Stellgröße in dem statororientierten Koordinatensystem im eingeschwungenen Zustand einen nicht-sinusförmige Stromverlauf und/oder einen nicht-sinusförmige Spannungsverlauf umfasst.

3. Verfahren nach Anspruch 1 oder 2, wobei der Verlauf der Messwerte der Regelgröße in dem statororientierten Koordinatensystem einen nicht-sinusförmigen Verlauf bezüglich des Polradwinkels der Synchronmaschine (2) aufweist und wobei der Schritt (S2) zum Transformieren des Messwerts dazu angepasst ist, den nicht-sinusförmigen Verlauf bei der Transformation in das feldorientierte Koordinatensystem in eine reine Gleichgröße als feldorientierte Regelgröße zu transformieren.

4. Verfahren nach Anspruch 3, wobei die statororientierten Verläufe der Stellgröße x_a und x_b gemäß den Gleichungen

$$x\_a = x\_d \cdot x\_d, a0\,(\varphi\_el) + x\_q \cdot x\_q, a0\,(\varphi\_el)$$

und

$$x\_b = x\_d \cdot x\_d, b0\,(\varphi\_el) + x\_q \cdot x\_q, b0\,(\varphi\_el)$$

aus den feldorientierten Stellgrößen x_d und x_q berechnet werden.

5. Verfahren nach Anspruch 3 oder 4, wobei normierte Verläufe y_d,a0($\varphi$_el) und y_d,b0($\varphi$_el) der Komponenten einer Regelgröße y im statororientierten Koordinatensystem zu einem konstanten Wert y_d der feldorientierten Längskomponente der Regelgröße und zu einem konstanten Wert y_q = 0 der feldorientierten Querkomponente der Regelgröße führen, und wobei normierte Verläufe y_q,a0($\varphi$_el) und y_q,b0($\varphi$_el) der Komponenten einer Regelgröße y im statororientierten Koordinatensystem zu einem konstanten Wert y_d = 0 der feldorientierten Längskomponente der Regelgröße und zu einem konstanten Wert y_q der feldorientierten Querkomponente der Regelgröße führen und wobei y_d,a0($\varphi$_el), y_d,b0($\varphi$_el), y_q,a0($\varphi$_el) und y_q,b0($\varphi$_el) mindestens einen nicht-sinusförmigen Verlauf umfassen.

6. Verfahren nach Anspruch 5, wobei die feldorientierten Verläufe y_d, y_q der Stellgröße gemäß den Gleichungen

$$y\_d \;=\; (y\_a \cdot y\_q, b0\,(\varphi\_el) - y\_b \cdot y\_q, a0\,(\varphi\_el))/N(\varphi)$$

*und*

$$y\_q \;=\; (y\_b \cdot y\_d, a0\,(\varphi\_el) - y\_a \cdot y\_d, b0\,(\varphi\_el))/(N(\varphi))$$

aus den statororientierten Komponenten y_a und y_b der Regelgröße und den die normierten Verläufe y_d,a0(φ_el), y_d,b0(φ_el), y_q,a0(φ_el) und y_q,b0(φ_el) der Regelgröße berechnet werden, und wobei

$$N(\varphi) = y\_d, a0\,(\varphi\_el) \cdot y\_q, b0\,(\varphi\_el) - y\_d, b0\,(\varphi\_el) \cdot y\_q, a0\,(\varphi\_el)$$

gilt.

7. Verfahren nach Anspruch 5 oder 6, wobei die normierten Verläufe x_d,a0(φ_el), x_d,b0(φ_el), x_q,a0(φ_el) und x_q,b0(φ_el) der Stellgröße und/oder die normierten Verläufe y_d,a0(φ_el), y_d,b0(φ_el), y_q,a0(φ_el) und y_q, b0(φ_el) der Regelgröße vorgegeben sind.

8. Verfahren nach Anspruch 5 oder 6, wobei die normierten Verläufe x_d,a0(φ_el), x_d,b0(φ_el), x_q,a0(φ_el) und x_q,b0(φ_el) der Stellgröße und/oder die normierten Verläufe y_d,a0(φ_el), y_d,b0(φ_el), y_q,a0(φ_el) und y_q, b0(φ_el) der Regelgröße in Abhängigkeit von Umgebungsparametern anpassbar sind.

9. Verfahren nach einem der Ansprüche 5, 6 oder 8, wobei die normierten Verläufe x_d,a0(φ_el), x_d,b0(φ_el), x_q, a0(φ_et) und x_q,b0(φ_el) der Stellgröße und/oder die normierten Verläufe y_d,a0(φ_el), y_d,b0(φ_el), y_q,a0(φ_el) und y_q,b0(φ_el) der Regelgröße in Abhängigkeit vom Betriebspunkt der Synchronmaschine (2) anpassbar sind.

10. Verfahren nach Anspruch 9, wobei das Anpassen der normierten Verläufe x_d,a0(φ_el), x_d,b0(φ_el), x_q,a0(φ_el) und x_q,b0(φ_el) der Stellgröße und/oder die normierten Verläufe y_d,a0(φ_el), yd,b0(φ_el), y_q,a0(φ_el) und y_q, b0(φ_el) der Regelgröße in Abhängigkeit vom Anteil eines Reluktanzmoment am Gesamtmoment der Synchronmaschine (2) erfolgt.

11. Verfahren nach einem der Ansprüche 1 bis 10, mit einem Schritt zum Ermitteln eines induzierten Spannungsverlaufs der im Leerlauf rotierenden Synchronmaschine (2) in Abhängigkeit vom Polradwinkel der Synchronmaschine (2), wobei der Schritt (S3) zum Berechnen der Stellgröße für die Ansteuerung der Synchronmaschine (2) die Stellgröße unter Verwendung des ermittelten induzierten Spannungsverlaufs berechnet wird und/oder wobei der Schritt (S2) zum Berechnen der Regelgröße im feldorientierten Koordinatensystem unter Verwendung des ermittelten induzierten Spannungsverlaufs berechnet wird.

12. Regelvorrichtung (1) für eine Synchronmaschine (2), mit:

   einer Messeinrichtung (10), die dazu ausgelegt ist, eine Regelgröße der Synchronmaschine (2) zu erfassen;
   einer ersten Transformationseinrichtung (11), die dazu ausgelegt ist, die erfasste Regelgröße der Synchronmaschine (2) von einem statororientierten Koordinatensystem in ein feldorientiertes Koordinatensystem zu transformieren,
   einer Recheneinrichtung (12), die dazu ausgelegt ist, unter Verwendung der in das feldorientierte Koordinatensystem transformierten Regelgröße und einem vorbestimmten Sollwert eine Stellgröße (u_1; u_2; u_3) für die Synchronmaschine (2) zu berechnen;
   einer zweiten Transformationseinrichtung (13), die dazu ausgelegt ist, die berechnete Stellgröße von einem feldorientierten Koordinatensystem in ein statororientierten Koordinatensystem zu transformieren, **dadurch gekennzeichnet, daß** der Verlauf der transformierten Stellgröße bezüglich des Polradwinkels der Synchronmaschine (2) in dem statororientierten Koordinatensystem einen nicht-sinusförmige Verlauf aufweist, sodass sich eine nicht sinusförmige Funktion als Funktion der Stellgröße in Abhängigkeit von dem Polradwinkel der Synchronmaschine in dem statororientierten Koordinatensystem ergibt;
   einer Ansteuereinrichtung (14), die dazu ausgelegt ist, die Synchronmaschine (2) unter Verwendung der in das statororientierten Koordinatensystem transformierten, nicht-sinusförmigen Stellgröße anzusteuern,
   und wobei ein konstanter Wert x_d der feldorientierten Längskomponente der Stellgröße (u_1; u_2; u_3) zu normierten Verläufen x_d,a0(φ_el) und x_d,b0(φ_el) im statororientierten Koordinatensystem führt und wobei ein konstanter Wert x_q der feldorientierten Querkomponente der Stellgröße (u_1; u_2; u_3) zu normierten Verläufen x_q,a0(φ_el) und x_q,b0(φ_el) im statororientierten Koordinatensystem führt und wobei die normierten Verläufe x_d,a0(φ_el), x_d,b0(φ_el), x_q,a0(φ_el) und x_q,b0(φ_el) mindestens einen nicht-sinusförmigen Verlauf umfassen.

13. Regelvorrichtung (1) nach Anspruch 12, wobei die erste Transformationseinrichtung (11) dazu ausgelegt ist, im statororientierten Koordinatensystem zumindest teilweise nicht-sinusförmige Verläufe der Regelgröße in konstant verlaufende Regelgrößen im feldorientierten Koordinatensystem zu transformieren.

14. Regelvorrichtung (1) nach Anspruch 12 oder 13, mit einer Speichereinrichtung, die dazu ausgelegt ist, Transformationswerte für eine oder mehrere Transformationen zwischen dem statororientierten Koordinatensystem und dem feldorientierten Koordinatensystem abzuspeichern, wobei die erste Transformationseinrichtung (11) und/oder die zweite Transformationseinrichtung (13) dazu ausgelegt ist, die Transformation unter Verwendung der abgespeicherten Transformationswerte auszuführen.

## Claims

1. Method for closed-loop control of a synchronous machine (2), including the steps of:

   capturing (S1) a measurement value of a controlled variable of the synchronous machine (2) in a stator-oriented coordinate system;
   transforming (S2) the captured measurement value from the stator-oriented coordinate system into a field-oriented coordinate system;
   calculating (S3) a manipulated variable ($u\_1$; $u\_2$; $u\_3$) for driving the synchronous machine (2) in the field-oriented coordinate system;
   transforming (S4) the calculated manipulated variable from the field-oriented coordinate system into the stator-oriented coordinate system; and
   driving (S5) the synchronous machine (2) on the basis of the manipulated variable that has been transformed into the stator-oriented coordinate system,
   **characterized in that**
   the transformation of the calculated manipulated variable ($u\_1$; $u\_2$; $u\_3$) from the field-oriented coordinate system into the stator-oriented coordinate system comprises a transformation into a non-sinusoidal curve of the manipulated variable with respect to a rotor angle of the synchronous machine (2) in the stator-oriented coordinate system such that a non-sinusoidal function arises as a function of the manipulated variable ($u\_1$; $u\_2$; $u\_3$) depending on the rotor angle of the synchronous machine in the stator-oriented coordinate system, and wherein a constant value $x\_d$ of the field-oriented direct-axis component of the manipulated variable ($u\_1$; $u\_2$; $u\_3$) leads to normalized curves $x\_d,a0(\varphi\_el)$ and $x\_d,b0(\varphi\_el)$ in the stator-oriented coordinate system and wherein a constant value $x\_q$ of the field-oriented quadrature-axis component of the manipulated variable ($u\_1$; $u\_2$; $u\_3$) leads to normalized curves $x\_q,a0(\varphi\_el)$ and $x\_q,b0(\varphi\_el)$ in the stator-oriented coordinate system and wherein the normalized curves $x\_d,a0(\varphi\_el)$, $x\_d,b0(\varphi\_el)$, $x\_q,a0(\varphi\_el)$ and $x\_q,b0(\varphi\_el)$ comprise at least one non-sinusoidal curve.

2. Method according to Claim 1, wherein the manipulated variable in the stator-oriented coordinate system in the steady state comprises a non-sinusoidal current curve and/or a non-sinusoidal voltage curve.

3. Method according to Claim 1 or 2, wherein the curve of the measurement values of the controlled variable in the stator-oriented coordinate system has a non-sinusoidal curve with respect to the rotor angle of the synchronous machine (2) and wherein the step (S2) of transforming the measurement value is adapted to transform the non-sinusoidal curve during the transformation into the field-oriented coordinate system into a pure zero-frequency variable as a field-oriented controlled variable.

4. Method according to Claim 3, wherein the stator-oriented curves of the manipulated variables $x\_a$ and $x\_b$ are calculated from the field-oriented manipulated variables $x\_d$ and $x\_q$ according to the following equations:

$$x\_a = x\_d \cdot x\_d,a0(\varphi\_el) + x\_q \cdot x\_q,a0(\varphi\_el)$$

and

$$x\_b = x\_d \cdot x\_d,b0(\varphi\_el) + x\_q \cdot x\_q,b0(\varphi\_el).$$

5. Method according to Claim 3 or 4, wherein normalized curves y_d, a0($\varphi$_el) and y_d,b0($\varphi$_el) of the components of a controlled variable y in the stator-oriented coordinate system lead to a constant value y_d of the field-oriented direct-axis component of the controlled variable and to a constant value y_q = 0 of the field-oriented quadrature-axis component of the controlled variable and wherein normalized curves y_q,a0($\varphi$_el) and y_q,b0($\varphi$_el) of the components of a controlled variable y in the stator-oriented coordinate system lead to a constant value y_d = 0 of the field-oriented direct-axis component of the controlled variable and to a constant value y_q of the field-oriented quadrature-axis component of the controlled variable and wherein y_d,a0($\varphi$_el), y_d,b0($\varphi$_el), y_q,a0($\varphi$_el) and y_q,b0($\varphi$_el) comprise at least one non-sinusoidal curve.

6. Method according to Claim 5, wherein the field-oriented curves y_d, y_q of the manipulated variable are calculated from the stator-oriented components y_a and y_b of the controlled variable and the normalized curves y_d,a0($\varphi$_el), y_d,b0($\varphi$_el), y_q,a0($\varphi$_el) and y_q,b0($\varphi$_el) of the controlled variable according to the following equations:

$$y\_d = (y\_a \cdot y\_q,b0(\varphi\_el) - y\_b \cdot y\_q,a0(\varphi\_el))/N(\varphi)$$

and

$$y\_q = (y\_b \cdot y\_d,a0(\varphi\_el) - y\_a \cdot y\_d,b0(\varphi\_el))/(N(\varphi)),$$

where

$$N(\varphi) = y\_d,a0(\varphi\_el) \cdot y\_q,b0(\varphi\_el) - y\_d,b0(\varphi\_el) \cdot y\_q,a0(\varphi\_el).$$

7. Method according to Claim 5 or 6, wherein the normalized curves x_d,a0($\varphi$_el), x_d,b0($\varphi$_el), x_q,a0($\varphi$_el) and x_q,b0($\varphi$_el) of the manipulated variable and/or the normalized curves y_d,a0($\varphi$_el), y_d,b0($\varphi$_el), y_q,a0($\varphi$_el) and y_q,b0($\varphi$_el) of the controlled variable are predetermined.

8. Method according to Claim 5 or 6, wherein the normalized curves x_d,a0($\varphi$_el), x_d,b0($\varphi$_el), x_q,a0($\varphi$_el) and x_q,b0($\varphi$_el) of the manipulated variable and/or the normalized curves y_d,a0($\varphi$_el), y_d,b0($\varphi$_el), y_q,a0($\varphi$_el) and y_q,b0($\varphi$_el) of the controlled variable are adaptable on the basis of ambient parameters.

9. Method according to any one of Claims 5, 6 or 8, wherein the normalized curves x_d,a0($\varphi$_el), x_d,b0($\varphi$_el), x_q,a0($\varphi$_el) and x_q,b0($\varphi$_el) of the manipulated variable and/or the normalized curves y_d,a0($\varphi$_el), y_d,b0($\varphi$_el) y_q,a0($\varphi$_el) and y_q,b0($\varphi$_el) of the controlled variable are adaptable on the basis of the operating point of the synchronous machine (2).

10. Method according to Claim 9, wherein the normalized curves x_d,a0($\varphi$_el), x_d,b0($\varphi$_el), x_q,a0($\varphi$_el) and x_q,b0($\varphi$_el) of the manipulated variable and/or the normalized curves y_d,a0($\varphi$_el), y_d,b0($\varphi$_el), y_q,a0($\varphi$_el) and y_q,b0($\varphi$_el) of the controlled variable are adapted on the basis of the component of a reluctance torque of the overall torque of the synchronous machine (2) .

11. Method according to any one of Claims 1 to 10, including a step for ascertaining an induced voltage curve of the synchronous machine (2), rotating in the idle state, as a function of the rotor angle of the synchronous machine (2), wherein the step (S3) for calculating the manipulated variable for driving the synchronous machine (2) calculates the manipulated variable using the ascertained induced voltage curve and/or wherein the step (S2) for calculating the controlled variable in the field-oriented coordinate system is calculated using the ascertained induced voltage curve.

12. Control apparatus (1) for a synchronous machine (2), comprising:

a measuring device (10) which is designed to capture a controlled variable of the synchronous machine (2);
a first transformation device (11) which is designed to transform the captured controlled variable of the synchronous machine (2) from a stator-oriented coordinate system into a field-oriented coordinate system,
a computing device (12) which is designed to calculate a manipulated variable (u_1; u_2; u_3) for the synchronous machine (2) using the controlled variable that has been transformed into the field-oriented coordinate system and a predetermined setpoint value;

a second transformation device (13) which is designed to transform the calculated manipulated variable from a field-oriented coordinate system into a stator-oriented coordinate system,

**characterized in that**

the curve of the transformed manipulated variable is a non-sinusoidal curve with respect to the rotor angle of the synchronous machine (2) in the stator-oriented coordinate system such that a non-sinusoidal function arises as a function of the manipulated variable depending on the rotor angle of the synchronous machine in the stator-oriented coordinate system;

a driver device (14) which is designed to drive the synchronous machine (2) using the non-sinusoidal manipulated variable that has been transformed into the stator oriented coordinate system,

and wherein a constant value x_d of the field-oriented direct-axis component of the manipulated variable (u_1; u_2; u_3) leads to normalized curves x_d,a0($\varphi$_el) and x_d,b0($\varphi$_el) in the stator-oriented coordinate system and wherein a constant value x_q of the field-oriented quadrature-axis component of the manipulated variable (u_1; u_2; u_3) leads to normalized curves x_q,a0($\varphi$_el) and x_q,b0($\varphi$_el) in the stator-oriented coordinate system and wherein the normalized curves x_d,a0($\varphi$_el), x_d,b0($\varphi$_el), x_q,a0($\varphi$_el) and x_q,b0($\varphi$_el) comprise at least one non-sinusoidal curve.

13. Control apparatus (1) according to Claim 12, wherein the first transformation device (11) is designed to transform curves of the controlled variable which are at least partly non-sinusoidal in the stator-oriented coordinate system into controlled variables with a constant curve in the field-oriented coordinate system.

14. Control apparatus (1) according to Claim 12 or 13, comprising a memory device which is designed to store transformation values for one or more transformations between the stator-oriented coordinate system and the field-oriented coordinate system, wherein the first transformation device (11) and/or the second transformation device (13) is designed to carry out the transformation using the stored transformation values.

**Revendications**

1. Procédé de régulation d'une machine synchrone (2), ledit procédé comprenant les étapes suivantes :

acquérir (S1) une valeur de mesure d'une grandeur de régulation de la machine synchrone (2) dans un système de coordonnées orienté stator ;

transformer (S2) la valeur de mesure acquise du système de coordonnées orienté stator dans un système de coordonnées orienté champ ;

calculer (S3) une grandeur de réglage (u_1 ; u_2 ; u_3) pour commander la machine synchrone (2) dans le système de coordonnées orienté champ ;

transformer (S4) la grandeur de réglage calculée du système de coordonnées orienté champ dans le système de coordonnées orienté stator ; et

commander (S5) la machine synchrone (2) sur la base de la grandeur de réglage transformée dans le système de coordonnées orienté stator,

**caractérisé en ce que** la transformation de la grandeur de réglage calculée (u_1 ; u_2 ; u_3) du système de coordonnées orienté champ dans le système de coordonnées orienté stator comprend une transformation en une courbe non-sinusoïdale, par rapport à un angle de rotor de la machine synchrone (2), de la grandeur de réglage dans le système de coordonnées orienté stator de façon à obtenir une fonction non-sinusoïdale se présentant sous la forme d'un fonction de la grandeur de réglage (u_1 ; u_2 ; u_3) dépendant de l'angle de rotor de la machine synchrone dans le système de coordonnées orienté stator, et une valeur constante x_d de la composante longitudinale orientée champ de la grandeur de réglage (u_1 ; u_2 ; u_3) conduisant à des courbes normées x_d,a0($\varphi$_el) et x_d,b0($\varphi$_el) dans le système de coordonnées orienté stator et une valeur constante x_q de la composante transversale orientée champ de la grandeur de réglage (u_1 ; u_2 ; u_3) conduisant à des courbes normées x_q,a0($\varphi$_el) et x_q,b0($\varphi$_el) dans le système de coordonnées orienté stator et les courbes normées x_d,a0($\varphi$_el), x_d,b0($\varphi$-el), x_q,a0($\varphi$_el) et x_q,b0($\varphi$_el) comprenant au moins une courbe non-sinusoïdale.

2. Procédé selon la revendication 1, la grandeur de réglage dans le système de coordonnées orienté stator en régime permanent comprenant une courbe de courant non-sinusoïdale et/ou une courbe de tension non-sinusoïdale.

3. Procédé selon la revendication 1 ou 2, la courbe des valeurs de mesure de la grandeur de régulation dans le système de coordonnées orienté stator étant une courbe non-sinusoïdale par rapport à l'angle de rotor de la machine synchrone (2) et l'étape (S2) de transformation de la valeur de mesure étant adaptée pour transformer la courbe non-sinusoïdale lors de la transformation dans le système de coordonnées orienté champ en une grandeur constante pure se présentant sous la forme d'une grandeur de régulation orientée champ.

4. Procédé selon la revendication 3, les courbes orientées stator de la grandeur de réglage x_a et x_b étant calculées à partir des grandeurs de réglage orientées champ x_d et x_q conformément aux équations

$$x\_a = x\_d \cdot x\_d,a0(\varphi\_el) + x\_q \cdot x\_q,a0((\varphi\_el)$$

et

$$x\_b = x\_d \cdot x\_d,b0(\varphi\_el) + x\_q \cdot x\_q,b0 (\varphi\_el).$$

5. Procédé selon la revendication 3 ou 4, les courbes normées y_d,a0($\varphi$_el) et y_d,b0($\varphi$_el) des composantes d'une grandeur de régulation y dans le système de coordonnées orienté stator conduisant à une valeur constante y_d de la composante longitudinale orientée champ de la grandeur de régulation et à une valeur constante y_q = 0 de la composante transversale orientée champ de la grandeur de régulation, et les courbes normées y_q,a0($\varphi$_el) et y_q,b0($\varphi$_el) des composantes d'une grandeur de régulation y dans le système de coordonnées orienté stator conduisant à une valeur constante y_d = 0 de la composante longitudinale orientée champ de la grandeur de régulation et à une valeur constante y_q de la composante transversale orientée champ de la grandeur de régulation et y_d,a0($\varphi$_el), y_d,b0($\varphi$_el), y_q,a0($\varphi$_el) et y_q,b0($\varphi$_el) comprenant au moins une courbe non-sinusoïdale.

6. Procédé selon la revendication 5, les courbes orientées champ y_d, y_q de la grandeur de réglage étant calculées à partir des composantes orientées stator y_a et y_b de la grandeur de régulation conformément aux équations

$$y\_d = (y\_a \cdot y\_q,b0(\varphi\_el) - y\_b \cdot y\_q,a0(\varphi\_el))/N(\varphi)$$

et

$$y\_q = (y\_b \cdot y\_d,a0(\varphi\_el) - y\_a \cdot y\_d,b0(\varphi\_el))/(N(\varphi))$$

et des courbes normées y_d,a0($\varphi$_el), y_d,b0($\varphi$_el), y_q,a0($\varphi$_el) et y_q,b0($\varphi$_el) de la grandeur de régulation, et avec

$$N(\varphi) = y\_d,a0(\varphi\_el) \cdot y\_q,b0(\varphi\_el) - y\_d,b0(\varphi\_el) \cdot y\_q,a0(\varphi\_el).$$

7. Procédé selon la revendication 5 ou 6, les courbes normées x_d,a0($\varphi$_el), x_d,b0($\varphi$_el), x_q,a0($\varphi$_el) et x_q,b0($\varphi$_el) de la grandeur de réglage et/ou les courbes normées y_d,a0($\varphi$_el), y_d,b0($\varphi$_el), y_q,a0($\varphi$_el) et y_q,b0($\varphi$_el) de la grandeur de régulation étant spécifiées.

8. Procédé selon la revendication 5 ou 6, les courbes normées x_d,a0($\varphi$_el), x_d,b0($\varphi$_el), x_q,a0($\varphi$_el) et x_q,b0($\varphi$_el) de la grandeur de réglage et/ou les courbes normées y_d,a0($\varphi$_el), y_d,b0($\varphi$_el), y_q,a0($\varphi$_el) et y_q,b0($\varphi$_el) de la grandeur de régulation pouvant être adaptées en fonction de paramètres d'environnement.

9. Procédé selon l'une des revendications 5, 6 et 8, les courbes normées x_d,a0($\varphi$_el), x_d,b0($\varphi$_el), x_q,a0($\varphi$_el) et x_q,b0($\varphi$_el) de la grandeur de réglage et/ou les courbes normées y_d,a0($\varphi$_el), y_d,b0($\varphi$_el), y_q,a0($\varphi$_el) et y_q,b0($\varphi$_el) de la grandeur de régulation pouvant être adaptées en fonction du point de fonctionnement de la machine synchrone (2).

**10.** Procédé selon la revendication 9, l'adaptation des courbes normées x_d,a0($\varphi$_el), x_d,b0($\varphi$_el), x_q,a0($\varphi$_el) et x_q,b0($\varphi$_el) de la grandeur de réglage et/ou des courbes normées y_d,a0($\varphi$_el), yd,b0($\varphi$_el), y_q,a0($\varphi$_el) et y_q, b0($\varphi$_el) de la grandeur de régulation étant effectuée en fonction de la proportion d'un couple de réluctance dans le couple total de la machine synchrone (2).

**11.** Procédé selon l'une des revendications 1 à 10, ledit procédé comprenant une étape de détermination d'une courbe de tension induite de la machine synchrone (2) tournant au ralenti en fonction de l'angle de rotor de la machine synchrone (2), l'étape (S3) de calcul de la grandeur de réglage destinée à commander la machine synchrone (2) étant calculée à l'aide de la courbe de tension induite déterminée et/ou l'étape (S2) de calcul de la grandeur de régulation dans le système de coordonnées orienté champ étant calculée à l'aide de la courbe de tension induite déterminée.

**12.** Dispositif de régulation (1) destiné à une machine synchrone (2), ledit dispositif comprenant :

un moyen de mesure (10) qui est conçu pour acquérir une grandeur de régulation de la machine synchrone (2) ;
un premier moyen de transformation (11) qui est conçu pour transformer la grandeur de régulation acquise de la machine synchrone (2) d'un système de coordonnées orienté stator dans un système de coordonnées orienté champ,
un moyen informatique (12) qui est conçu pour calculer une grandeur de réglage (u_1 ; u_2 ; u_3), destinée à la machine synchrone (2), à l'aide de la grandeur de régulation transformée dans le système de coordonnées orienté champ et d'une valeur de consigne prédéterminée ;
un deuxième moyen de transformation (13) qui est conçu pour transformer la grandeur de réglage calculée d'un système de coordonnées orienté champ dans un système de coordonnées orienté stator, **caractérisé en ce que** la courbe de la grandeur de réglage transformée par rapport à l'angle de rotor de la machine synchrone (2) dans le système de coordonnées orienté stator est une courbe non-sinusoïdale de façon à obtenir une fonction non-sinusoïdale se présentant sous la forme d'une fonction la grandeur de réglage dépendant de l'angle de rotor de la machine synchrone dans le système de coordonnées orienté stator ;
un moyen de commande (14) qui est conçu pour commander la machine synchrone (2) à l'aide de la grandeur de réglage non-sinusoïdale transformée dans le système de coordonnées orienté stator,
et une valeur constante x_d de la composante longitudinale orientée champ de la grandeur de réglage (u_1 ; u_2 ; u_3) conduisant à des courbes normées x_d,a0($\varphi$_el) et x_d,b0($\varphi$_el) dans le système de coordonnées orienté stator et une valeur constante x_q de la composante transversale orientée champ de la grandeur de réglage (u_1 ; u_2 ; u_3) conduisant à des courbes normées x_q,a0($\varphi$_el) et x_q,b0($\varphi$_el) dans le système de coordonnées orienté stator et les courbes normées x_d,a0($\varphi$_el), x_d,b0($\varphi$_el), x_q,a0($\varphi$_el) et x_q,b0($\varphi$_el) comprenant au moins une courbe non-sinusoïdale.

**13.** Dispositif de régulation (1) selon la revendication 12, le premier moyen de transformation (11) étant conçu pour transformer au moins partiellement des courbes non-sinusoïdales de la grandeur de régulation dans le système de coordonnées orienté stator en grandeurs de régulation constantes dans le système de coordonnées orienté champ.

**14.** Dispositif de régulation (1) selon la revendication 12 ou 13, comprenant un moyen de mémorisation destiné à mémoriser des valeurs de transformation pour une ou plusieurs transformations entre le système de coordonnées orienté stator et le système de coordonnées orienté champ, le premier moyen de transformation (11) et/ou le deuxième moyen de transformation (13) étant conçus pour effectuer la transformation à l'aide des valeurs de transformation mémorisées.

# Fig. 1

# Fig. 2a

# Fig. 2b

# Fig. 3

# Fig. 4

# Fig. 5

## Fig. 6

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010043454 A1

- US 20110241586 A1

**In der Beschreibung aufgeführte Nicht-Patentliteratur**

- **LAZOR, M. ; STULRAJTER, M.** Modified Field Oriented Control for Smooth Torque Operation of a BLDC Motor. *Tagungsband der IEEE Elektro 2014,* 19. Mai 2014, ISBN 978-1-4799-3720-2, 180-185